# EUROPÄISCHE PATENTANMELDUNG

(11) **EP 1 319 572 A2**
(43) Veröffentlichungstag der Anmeldung: **18.06.2003**
(21) Anmeldenummer: 02026962.7
(22) Anmeldetag: 04.12.2002
(51) Int. Cl.: B62D 1/10

(54) **Vorrichtung zur Befestigung eines Lenkrades**

(30) Priorität: 14.12.2001 DE 20120260 U
(71) Anmelder: TRW Automotive Safety Systems GmbH, 63743 Aschaffenburg (DE)
(72) Erfinder: Lorenz, Christian, 63849 Leidersbach 3 (DE)
(74) Vertreter: Kitzhofer, Thomas, Dipl.-Ing.

(57) **Zusammenfassung**

Die Erfindung betrifft eine Vorrichtung zur Befestigung eines Lenkrads an einer Lenkwelle (1), wobei die Vorrichtung ein Lenkwellenende (3) mit einer Kontaktfläche (11) zur Anlage der Lenkradnabe (5) aufweist. Das Lenkwellenende (3) hat einen sich längs der Lenkwellenachse (A) erstreckenden Schlitz (21), der wenigstens zwei gegenüberliegende Lenkwellenendabschnitte (25, 27) erzeugt, wobei die Vorrichtung ein Mittel zum wahlweisen Verändern der Schlitzbreite (B) aufweist.

## Beschreibung

Die Erfindung betrifft eine Vorrichtung zur Befestigung eines Lenkrads an einer Lenkwelle.

In der Vergangenheit sind zahlreiche Befestigungsvorrichtungen angedacht worden, mittels denen das Lenkrad lösbar an der Lenkwelle befestigt werden kann. Beispielsweise radial zur Lenkwelle, in einer Nut derselben verschiebbare Verriegelungsteile wurden angedacht. Darüber hinaus gibt es auch Lösungen, bei denen an der Stirnseite des Lenkwellenendes nach dem Aufstecken des Lenkrads einfach eine Schraube oder Mutter aufgedreht wird.

Die Erfindung schafft eine Vorrichtung zum lösbaren Befestigen eines Lenkrads an einer Lenkwelle, die aus extrem wenigen Teilen besteht und eine sichere Arretierung des Lenkrads sowie eine leichte Demontage ermöglicht. Die erfindungsgemäße Vorrichung umfaßt ein Lenkwellenende mit einer Kontaktfläche zur Anlage der Lenkradnabe, wobei das Lenkwellenende einen sich längs der Lenkwellenachse erstreckenden Schlitz aufweist, der wenigstens zwei gegenüberliegende Lenkwellenabschnitte erzeugt. Zudem umfaßt die erfindungsgemäße Vorrichtung ein Mittel zum wahlweisen Verändern der Schlitzbreite. Die erfindungsgemäße Vorrichtung sieht vor, das Lenkwellenende zu schlitzen, um die dadurch entstehenden Abschnitte zusammenzudrücken oder auseinanderbewegen zu können, wofür ein separates Mittel vorgesehen ist. Im besten Fall besteht deshalb die Vorrichtung nur aus dem geschlitzten Lenkwellenende und dem Mittel. Damit sind sehr wenig Teile zur Montage erforderlich.

Das Mittel greift vorzugsweise an beiden Lenkwellenendabschnitten an und verändert die Schlitzbreite so, daß ein axiales Aufschieben des Lenkrads auf die Lenkwelle und/oder ein Arretieren des Lenkrad an der Lenkwelle möglich sind/ist. Das Mittel ist beispielsweise eine Schraube, die in ein Gegengewinde in einem Lenkwellenabschnitt eingedreht wird.

Ein radial vorstehender Absatz, der vorzugsweise am Lenkwellenende vorgesehen ist, soll ein Abziehen des Lenkrades, welches vom Lenkwellenende aus gesehen axial hinter dem Absatz positioniert ist, verhindern. Durch das Mittel muß der Schlitz so verändert werden können, daß die Nabe über den Absatz geschoben werden kann. Anschließend müssen die Lenkwellenendabschnitte wieder soweit voneinander entfernt werden, daß der Absatz ein Abziehen der Nabe verhindert.

Vorzugsweise ist die Kontaktfläche als formschlüssige Wellen-Nabenverbindung ausgeführt, insbesondere mit einer axial verlaufenden Verzahnung, die ein Aufschieben der Nabe in Axialrichtung ermöglicht.

Zur besseren axialen Sicherung der Nabe auf dem Lenkwellenende ist angedacht, das Lenkwellenende im Bereich der Kontaktfläche mit geringeren radialen Abmessungen auszuführen als an dem sie angrenzenden Teil oder den sie angrenzenden Teilen des Lenkwellenendes. Je nachdem, ob beide angrenzenden Teile eine größere radiale Abmessung haben als das Lenkwellenende im Bereich der Kontaktfläche können ein oder zwei stirnseitige Absätze, die als axiale Anschläge dienen, gebildet werden.

Vorzugsweise ist wenigstens eine der beiden Absätze konisch ausgebildet, damit durch das Verändern der Schlitzbreite die Lenkwellennabe zwischen wenigstens einem Konus und einem gegenüberliegenden stirnseitigen Absatz axial verspannt wird, um Spiel aus der Befestigungsvorrichtung zu nehmen.

Das Mittel zum Verändern der Schlitzbreite liegt vorzugsweise, vom Lenkwellenende aus gesehen, axial hinter der Kontaktfläche. Dies soll es ermöglichen, daß an der Lenkwellennabe keine entsprechenden Zugangsöffnungen zur Betätigung des Mittels vorgesehen sein müssen.

Der Schlitz verläuft quer zur Lenkwellenachse durchgehend, vorzugsweise radial durchgehend, wobei der Schlitz bei letzterer Option das Lenkwellenende in zwei gleiche Lenkwellenendabschnitte teilen sollte.

Die Vorrichtung umfaßt vorzugsweise nicht nur das Lenkwellenende und das Mittel, sondern auch die auf das Lenkwellenende abgestimmte Lenkradnabe.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht eines Lenkwellenendes und, im Schnitt, einer daran befestigten Lenkradnabe sowie einer erfindungsgemäßen Vorrichtung zur Befestigung gemäß einer ersten Ausführungsform,
- Figur 2 eine Seitenansicht eines Lenkwellenendes und, im Schnitt, einer daran befestigten Lenkradnabe und einer erfindungsgemäßen Vorrichtung zur Befestigung gemäß einer zweiten Ausführungsform,
- Figur 3 den in Figur 1 mit I bezeichneten, umrahmten Bereich des Lenkwellenendes, das in diesem Bereich modifiziert ist,
- Figur 4 den in Figur 1 mit I bezeichneten, umrahmten Bereich, der nochmals etwas anders modifiziert ist,
- Figur 5 den in Figur 1 mit II umrahmten Bereich, der geringfügig modifiziert ausgeführt ist.

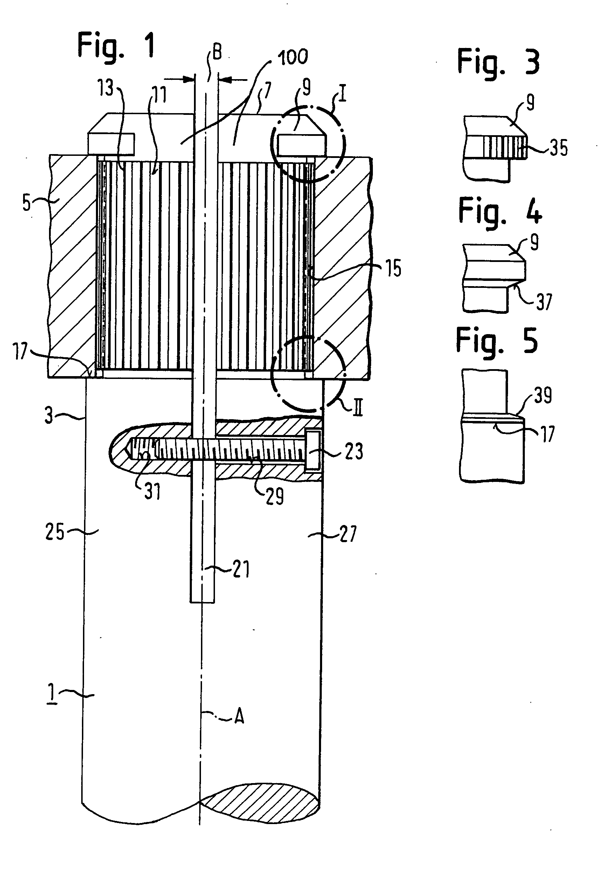

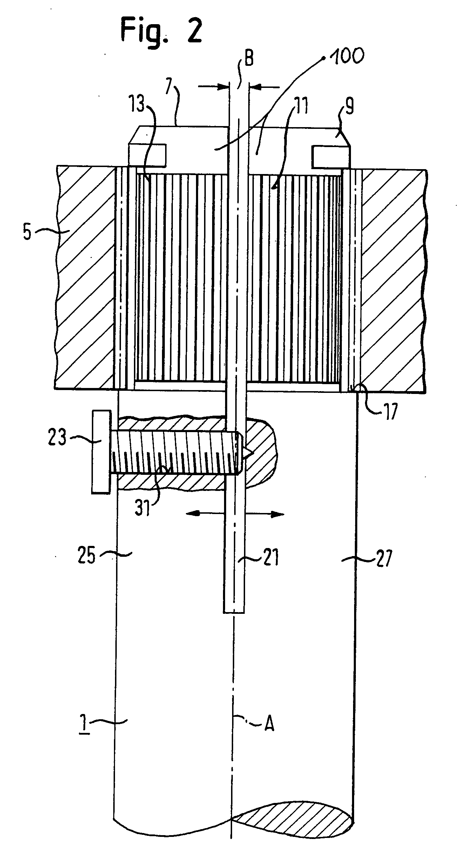

In Figur 1 ist eine Lenkwelle 1 mit einem Lenkwellenende 3 dargestellt, auf dem die Nabe 5 eines Lenkrads befestigt ist. Vom Ende 7 der Lenkwelle aus gesehen hat diese zuerst einen radial vorstehenden Absatz 9 und anschließend einen Abschnitt mit geringerer radialer Ausdehnung, der eine Kontaktfläche 11 zur Lenkradnabe 5 bildet. Im Bereich der Kontaktfläche ist eine Wellen-Nabenverbindung in Form einer axial verlaufenden Verzahnung, insbesondere einer Keilwellenverzahnung 13 vorgesehen. Die Nabe 5 hat an ihrer Aufnahmeöffnung 15 eine entsprechende Gegenverzahnung.

Nach der Kontaktfläche 11 besitzt das Lenkwellenende 3 einen Absatz 17, so daß die Lenkradnabe 5 axial zwischen dem Absatz 9 und dem Absatz 17 positioniert ist, vorzugsweise spielfrei.

Das Lenkwellenende weist einen sich längs der Lenkwellenachse A erstreckenden radialen und durchgehenden Schlitz 21 mit einer Schlitzbreite B, gemessen am Ende der Lenkwelle 1, auf.

Eine radiale Schraube 23 ist, vom Lenkwellenende aus gesehen, axial hinter der Kontaktfläche 11 und nach dem Absatz 17 angeordnet. Die Schraube 23 bildet ein Mittel zum wahlweisen Verändern der Schlitzbreite B.

Der Schlitz 21 teilt das Lenkwellenende 3 in zwei gegenüberliegende, vorzugsweise gleichgroße Lenkwellenendabschnitte 25, 27. Im Abschnitt 27 ist eine Durchgangsöffnung 29 für das Aufnehmen der Schraube 23 vorgesehen. Im Abschnitt 25 hingegen ist eine Gewindebohrung 31, die mit der Durchgangsöffnung 29 fluchtet, angeordnet, in die die Schraube 23 eingedreht wird.

Das geschlitzte Lenkwellenende 3 und die Schraube 23 bilden eine Vorrichtung zur Befestigung des Lenkrads, symbolisiert durch die Lenkradnabe 5, an der Lenkwelle 1. Optional kann auch die Lenkradnabe 5 zur Vorrichtung zur Befestigung des Lenkrads an der Lenkwelle 1 hinzugezählt werden.

Zum axialen Aufstecken des Lenkrads auf die Lenkwelle wird die Schraube angezogen, so daß die Breite B des Schlitzes verringert wird. Sobald die beiden Abschnitte 25, 27 so nah zusammengeführt sind, daß sie kleiner als der Durchmesser der Nabe 5 sind, kann diese aufgeschoben werden. Anschließend wird die Schraube wieder in Gegenrichtung gedreht, so daß sich die Breite B des Schlitzes wieder vergrößert. Dann sitzt die Nabe 5 auch axial positioniert fest auf der Lenkwelle, und die Verzahnungen greifen ineinander.

Da durch die Veränderung der Breite B des Schlitzes eine Änderung der Abmessungen des Lenkwellenendes nur quer zur Schlitzbreite erfolgt, muß der Absatz 9 in denjenigen Randbereichen 100 seitlich abgeflacht sein, die nahe des Schlitzes 21 liegen, denn in diesen Bereichen wird durch das Verringern der Breite B des Schlitzes die Dimension des Absatzes 9 in radialer Richtung nicht verändert.

Die Ausführungsform nach Figur 2 entspricht im wesentlichen der in Figur 1 gezeigten, so daß funktionsgleiche Abschnitte oder Bauteile mit den bereits eingeführten Bezugszahlen versehen werden und im folgenden nur noch auf die Unterschiede eingegangen wird.

Bei der Ausführungsform nach Figur 2 ist im Lenkwellenendabschnitt 25 ein Gewinde 31 vorgesehen, in welches die Schraube 23 eingedreht wird. Im Lenkwellenendabschnitt 27 hingegen ist keine Öffnung. Vielmehr drückt beim Eindrehen der Schraube 23 deren Spitze gegen den Lenkwellenendabschnitt 27, so daß die Breite B des Schlitzes 21 vergrößert wird.

Beim Aufschieben der Nabe 5 drückt die Schraube 23 die Lenkwellenendabschnitte 25, 27 nicht zusammen und ragt vorzugsweise auch nicht in den Schlitz 21. Die Lenkwellenendabschnitte 25, 27 können deshalb beim Aufschieben der Nabe 5 aufeinander zubewegt werden, wenn die Nabe etwas enger als die Abmessung des Absatzes 9 sein sollte. Zur leichteren Demontage hingegen ist es vorteilhaft, wenn die Nabe geringfügig größer als der Absatz 9 ist. Sobald die Nabe 5 vollständig auf der Kontaktfläche 11 sitzt, werden die Schraube 23 in das Gewinde 31 eingedreht und der Schlitz 21 verbreitert. Dann greifen die Verzahnungen auf der Innenseite der Nabe 5 und an der Kontaktfläche 11 ineinander, so daß in Umfangsrichtung eine formschlüssige Verbindung entsteht. Auch der Absatz 9 wandert radial nach außen und sichert die aufgeschobene Nabe 5 in Axialrichtung.

Optional kann, wie in Figur 3 dargestellt, der Absatz 9 im Bereich eines zylindrischen Außenumfangs ebenfalls eine Verzahnung besitzen. Die Verzahnung bildet eine axiale Führungskontur 35, die das Ausrichten des Lenkrads bei der Montage in Umfangsrichtung relativ zur Lenkwelle 1 erleichtern soll. Die die axiale Führungskontur bildende Verzahnung ist exakt zur Verzahnung 13 ausgerichtet, d.h. die Nabe gleitet an der axialen Führungskontur 35 axial entlang, um dann ohne verdreht werden zu können in die Verzahnung 13 einzurasten.

Um ein axiales Spiel zwischen der Nabe 5 und der Lenkwelle 1 auszuschließen, kann im Bereich des Absatzes 9 und/oder im Bereich des Absatzes 17 zur Kontaktfläche 11 hin ein Konus 37 vorgesehen sein. Die Nabe 5 ist in diesem Bereich mit einem entsprechenden Gegenkonus ausgeführt. Alternativ oder zusätzlich zum Konus 37 kann ein federndes Element 39, z.B. eine elastomere Scheibe oder eine Federscheibe, zwischen einem der Absätze 9, 17 und der Nabe 5 angeordnet sein, um die Nabe 5 gegenüber der Lenkwelle 1 axial vorzuspannen und ein axiales Spiel zwischen den beiden zu vermeiden.

Der Schlitz 21 ist in den Figuren als radial durchgehender und die Achse A schneidender Schlitz dargestellt. Optional wäre es auch denkbar, daß der Schlitz 21 außerhalb der Achse A verläuft. Darüber hinaus müßte er auch nicht durchgehend ausgeführt sein. Beispielsweise könnte die Lenkwelle 21 zumindest im Bereich des Lenkwellenendes 3 hohl ausgeführt sein, so daß es zur Erzielung einer radialen Nachgiebigkeit ausreichend sein könnte, den Schlitz nur bis zum hohlen Inneren des Lenkwellenendes 3 zu führen.

Optional könnten auch zwei nicht miteinander fluchtende Schlitze 21 zum hohlen Lenkwellenende 3 führen, um zwei getrennte Kreissegmente, vom Lenkwellenende aus gesehen, zu erzeugen, die relativ zueinander beweglich sind.

## Patentansprüche

1. Vorrichtung zur Befestigung eines Lenkrads an einer Lenkwelle (1),
wobei die Vorrichtung ein Lenkwellenende (3) mit einer Kontaktfläche (11) zur Anlage der Lenkradnabe (5) aufweist,
wobei das Lenkwellenende (3) einen sich längs der Lenkwellenachse (A) erstreckenden Schlitz (21) aufweist, der wenigstens zwei gegenüberliegende Lenkwellenendabschnitte (25, 27) erzeugt, und
wobei die Vorrichtung ein Mittel zum wahlweisen Verändern der Schlitzbreite (B) aufweist.

2. Vorrichtung nach Anspruch 1, **dadurch gekennzeichnet, daß** das Mittel an beiden Lenkwellenendabschnitten (25, 27) angreift und die Schlitzbreite (B) so verändert, daß ein axiales Aufschieben des Lenkrades auf die Lenkwelle (1) und/oder Arretieren des Lenkrads an der Lenkwelle (1) möglich ist.

3. Vorrichtung nach Anspruch 1 oder 2, **dadurch gekennzeichnet, daß** das Mittel eine Schraube (23) ist, die in ein Gegengewinde (31) in einem Lenkwellenendabschnitt (25) gedreht ist.

4. Vorrichtung nach einem der vorhergehenden Ansprüche, **dadurch gekennzeichnet, daß** wenigstens ein an die Kontaktfläche (11) angrenzender Absatz (9, 17) am Lenkwellenende (3) vorgesehen ist.

5. Vorrichtung nach Anspruch 4, **dadurch gekennzeichnet, daß** der Absatz (9, 17) konisch ausgebildet ist.

6. Vorrichtung nach Anspruch 4 oder 5, **dadurch gekennzeichnet, daß** das Lenkwellenende (3) einen radial vorstehenden Absatz (9) aufweist.

7. Vorrichtung nach Anspruch 6, **dadurch gekennzeichnet, daß** der Absatz (9) am Lenkwellenende am Außenumfang wenigstens eine axiale Führungskontur hat, die eine Drehung der Nabe beim Aufschieben auf die Welle verhindert.

8. Vorrichtung nach einem der vorhergehenden Ansprüche, **dadurch gekennzeichnet, daß** die Kontaktfläche (11) als formschlüssige Wellen-Nabenverbindung ausgebildet ist.

9. Vorrichtung nach Anspruch 8, **dadurch gekennzeichnet, daß** die Wellen-Nabenverbindung eine axiale Verzahnung (13) hat.

10. Vorrichtung nach den Ansprüchen 7 und 9, **dadurch gekennzeichnet, daß** die Führungskontur (35) zur axialen Verzahnung (13) ausgerichtet ist.

11. Vorrichtung nach einem der vorhergehenden Ansprüche , **dadurch gekennzeichnet, daß** das Lenkwellenende (3) im Bereich der Kontaktfläche (11) geringere radiale Abmessungen hat als der an sie angrenzende Teil des Lenkwellenendes (3).

12. Vorrichtung nach einem der vorhergehenden Ansprüche, **dadurch gekennzeichnet, daß** das Mittel vom Lenkwellenende (3) aus gesehen axial hinter der Kontaktfläche (11) angeordnet ist.

13. Vorrichtung nach einem der vorhergehenden Ansprüche, **dadurch gekennzeichnet, daß** sich der Schlitz (21) quer zur Lenkwellenachse (A), vorzugsweise radial, und durch das Lenkwellenende (3) erstreckt.

14. Vorrichtung nach einem der vorhergehenden Ansprüche, **dadurch gekennzeichnet, daß** ein federndes Element (39) am Lenkwellenende (3) angeordnet ist, das eine axiale Kraft auf die Lenkradnabe (5) ausübt.

15. Vorrichtung nach einem der vorhergehenden Ansprüche, **dadurch gekennzeichnet, daß** sie die Lenkradnabe (5) aufweist.
